# EUROPEAN PATENT APPLICATION

(11) **EP 4 070 698 A1**
(43) Date of publication of application: **12.10.2022**
(21) Application number: 21167327.2
(22) Date of filing: 08.04.2021
(51) Int. Cl.: A47J 31/44, A47J 31/46, A47J 31/52

(54) **CONTROLLING A FROTH-TO-MILK-RATIO BY VARYING STEAM PRESSURE IN A MILK FROTHING ARRANGEMENT**

(71) Applicant: Koninklijke Philips N.V., 5656 AG Eindhoven (NL)
(72) Inventor: TIBBE, Tim Gerard, 5656 AE Eindhoven (NL); NOORDHUIS, Joeke, 5656 AE Eindhoven (NL)
(74) Representative: de Vries, Janna

(57) **Abstract**

In the field of beverage making, a milk frothing arrangement is provided that comprises: a main channel (40) having a milk inlet (41); a steam supply arrangement; a steam channel (42) arranged to receive steam from the steam supply arrangement at an upstream side and to merge into the main channel (40) at a downstream side; a mixing chamber (35) into which the main channel (40) debouches at a position downstream of the position where the steam channel (42) merges into the main channel (40); and a controller configured to control operation of the milk frothing arrangement. The controller is particularly configured to control a froth-to-milk ratio to be realized by controlling the pressure of the steam to be supplied by the steam supply arrangement, wherein the froth-to-milk ratio may be derived from input provided by a user about a beverage type that is to be made.

## Description

### FIELD OF THE INVENTION

The invention relates to a milk frothing arrangement, comprising: a main channel having a milk inlet configured to receive milk from a milk supply arrangement; a steam supply arrangement; a steam channel arranged to receive steam from the steam supply arrangement at an upstream side and to merge into the main channel at a downstream side; a mixing chamber into which the main channel debouches at a position downstream of the position where the steam channel merges into the main channel; and a controller configured to control operation of the milk frothing arrangement.

Further, the invention relates to a beverage maker, comprising a milk frothing arrangement as mentioned. In particular, such a beverage maker may be a coffee maker that is configured to extract coffee input material and to output a coffee beverage.

### BACKGROUND OF THE INVENTION

In several applications of a beverage maker such as a coffee maker, it is desired to have a frothing function in the device in order to produce milk froth, which milk froth is then admixed or added to the beverage. In view thereof, it is known to equip a beverage maker with a milk frothing arrangement that is configured to transport milk and introduce gas into the milk, which gas is normally ambient air that is drawn into the milk frothing arrangement at an appropriate position. For the sake of completeness, it is noted that where the word "milk" is used in the present text, this is to be understood so as to cover all liquids normally referred to as milk, including both milk of animal origin and milk of vegetable origin. The invention relates to a milk frothing arrangement that comprises a main channel having a milk inlet configured to receive milk from a milk supply arrangement, and that further comprises a steam supply arrangement and a steam channel arranged to receive steam from the steam supply arrangement at an upstream side and to merge into the main channel at a downstream side. The configuration may in particular be such that the milk is caused to be drawn from the milk supply arrangement by generating pressure differences based on a Venturi effect. The fact is that steam passing a restriction causes local under pressure, and it is this local under pressure that is advantageously used for suction of the milk from the milk supply arrangement and transportation of the milk further downstream of the milk supply arrangement. The restriction as mentioned may be present near the interface of the steam channel and the main channel. The steam received from the steam supply arrangement may further have a function in heating the milk and mixing the milk with air.

Full automatic espresso appliances are normally configured to deliver different types of coffee beverage. In the field of such appliances, it is practical if the appliance comprises a user interface that is configured to enable a user to provide input to the appliance on the basis of which an appropriate mode of operation of the appliance can be set and carried out. For example, when it comes to operating such an appliance for making coffee beverages including milk froth, it may be so that a user can choose from Cappuccino and Latte Macchiato, for example.

In conventional situations, preparing the milk froth that is needed in the various coffee beverages including milk froth is always done in the same manner. This means that the mode of operation of the appliance may differ with the choice of beverage type, but that the mode of operation of the milk frothing arrangement is always the same, at least as far as sound/stability of the operation, froth-to-milk ratio to be realized and the froth temperature to be realized are concerned. In the context of the invention, it is acknowledged that there may be a need for having different modes of operation of a milk frothing arrangement, at least as far as the froth-to-milk ratio to be realized is concerned, so that the user can be allowed to simply choose a type of coffee beverage including milk froth and the appropriate froth-to-milk ratio is automatically realized by the milk frothing arrangement.

In the art, methods of varying the froth-to-milk ratio have been developed, but these methods are not very practical and involve disadvantages. The fact is that these methods involve using some kind of arrangement for varying the size of an air inlet at the position of the air inlet on the channel where milk is flowing during operation. Such arrangement may comprise an adjustable valve for setting the size of the airflow, for example, as known from WO 2006/043808 A2. However, the implementation of such methods is cost-intensive, while in the field of consumer appliances, it is desirable to keep costs as low as possible. What's more, varying the size of the opening of the air inlet also influences the milk temperature, wherein there is a risk that the milk temperature ends up being too low, and may cause the foam formation process to become unstable, which results in noise, spitting and/or creation of uncontrolled, large bubbles.

### SUMMARY OF THE INVENTION

It is an object of the invention to provide a practical possibility of varying the froth-to-milk ratio to be realized by a milk frothing arrangement without needing to take costly measures.

In view of the foregoing, the invention provides a milk frothing arrangement, comprising a main channel having a milk inlet configured to receive milk from a milk supply arrangement, a steam supply arrangement, a steam channel arranged to receive steam from the steam supply arrangement at an upstream side and to merge into the main channel at a downstream side; a mixing chamber into which the main channel debouches at a position downstream of the position where the steam channel merges into the main channel; and a controller configured to control operation of the milk frothing arrangement, to receive input that is representative of a froth-to-milk ratio to be realized, and to determine a setting value that is representative of the pressure of the steam to be supplied by the steam supply arrangement in relation to the input.

It follows from the foregoing definition of the milk frothing arrangement according to the invention that the invention resides in controlling the froth-to-milk ratio by controlling the pressure of the steam that is supplied by the steam supply arrangement during operation of the milk frothing arrangement. It is an insight of the invention that it is possible to have this kind of control, which enables automatic realization of a froth-to-milk ratio that is appropriate to a choice of beverage type by a user without a need for adjustment to or addition of hardware components. Also, this kind of control involves a possibility to actually realize the appropriate froth-to-milk ratio every time a certain beverage type is chosen, i.e. to make the beverage type with high consistency, at least as far as the froth-to-milk ratio is concerned.

Basically, the invention involves determining a setting value that is representative of the pressure of the steam to be supplied by the steam supply arrangement in relation to input that is representative of a froth-to-milk ratio to be realized. In practical situations, the input as mentioned may be input determined by a user. For example, when a user chooses a certain beverage type, the choice of the user involves information about the froth-to-milk ratio to be realized on the basis of a relation between beverage type and froth-to-milk ratio. This relation may for instance be stored in a look-up table, which may be accessed by the controller of the milk frothing arrangement. By determining the setting value that is representative of the appropriate pressure of the steam to be supplied by the steam supply arrangement and controlling the milk frothing arrangement in accordance with the setting value, the beverage can actually be prepared with the appropriate froth-to-milk ratio.

With reference to the above explanation of the invention, it is noted that the invention covers an option of the controller of the milk frothing arrangement being configured to set one of at least two modes of operation which are different at least as far as the froth-to-milk ratio to be realized is concerned, wherein the at least two different modes of operation involve different setting values which are representative of the pressure of the steam to be supplied by the steam supply arrangement. In this respect, it is advantageous if the milk frothing arrangement comprises a user interface configured to enable a user to instruct the controller which one of the at least two modes of operation is to be set. Such a user interface may comprise at least one button and/or a touchscreen, for example. The different modes of operation may be selected directly by the user via an appropriate selection menu on the interface, or indirectly by letting the user select the beverage type and letting the controller determine the associated mode of operation, as described above.

In a practical embodiment of the milk frothing arrangement according to the invention, the steam supply arrangement comprises an electric heater configured to heat water in a heating area of the steam supply arrangement. In that case, there is a possibility that a setting value of electric power to be supplied to the electric heater is determined in relation to the setting value that is representative of the pressure of the steam to be supplied by the steam supply arrangement. The basis of this possibility is found in the insight that the steam pressure can be varied by varying the electric power to be supplied to the electric heater, wherein a higher power supply results in a higher steam pressure.

Alternatively or additionally, it is practical if the steam supply arrangement comprises a pumping arrangement configured to transport an amount of water through the heating area. In view thereof, there is an additional or an alternative possibility, namely a possibility according to which a setting value of the amount of water is determined in relation to the setting value that is representative of the pressure of the steam to be supplied by the steam supply arrangement. The basis of this possibility is found in the insight that the steam pressure can be varied by varying the amount of water to be transported through the heating area, wherein a larger amount results in a lower steam pressure.

Theoretically, it is feasible to parametrize the milk frothing arrangement in such a way that its performance in terms of steam pressure and froth output are fully predictable. However, in practice, it may be useful to take measures aimed at obtaining feedback. In view thereof, it is advantageous if the milk frothing arrangement comprises a measurement system configured to measure a value of the pressure of the steam supplied by the steam supply arrangement and/or a value of a parameter that varies with the pressure of the steam supplied by the steam supply arrangement. In such case, the controller may be configured to receive the measured value from the measurement system as a feedback value, to make a comparison between a) the setting value determined in relation to the input that is representative of the froth-to-milk ratio to be realized and b) the feedback value. In case a difference between the setting value and the feedback value is found and the difference is larger than a maximum, the controller may adjust operation of the milk frothing arrangement to thereby reduce the difference. In this way, it is possible to compensate for practical/structural differences, and to ensure that the froth-to-milk ratio that is eventually realized is as close as possible to the froth-to-milk ratio that is envisaged. The controller may particularly be configured to adjust operation of the steam supply arrangement in case a difference between the setting value and the feedback value is found and the difference is larger than the maximum. As explained in the foregoing, there are various operation parameters which can be varied in order to realize a value of the steam pressure by means of the steam supply arrangement that is closer to the theoretical value.

The feedback may be obtained in any possible suitable way. For example, it may be so that the measurement system is configured to measure a level of sound generated during operation of the milk frothing arrangement, wherein the measured value that is received by the controller from the measurement system as a feedback value is the measured level of the sound. In this respect, it is possible that the measurement system comprises a microphone, for example.

Realizing feedback about the steam pressure in a direct and/or an indirect manner offers a possibility of having a self-learning functionality in the milk frother arrangement. Such functionality can be realized if the controller is configured to adjust an algorithm used to control operation of the milk frothing arrangement on the basis of an actual adjustment of operation of the milk frothing arrangement, and to apply the adjusted algorithm thus obtained in a following milk frothing action. Eventually, an appropriate algorithm that leads to only minimal differences between theory and practice can be obtained in an iterative way. When features of the milk frothing arrangement change over time, it is possible to compensate for any possible effects of the changes on the relation between a setting value that is representative of the pressure of the steam to be supplied by the steam supply arrangement and a froth-to-milk ratio that is realized.

As a milk frothing process normally involves aerating the milk so that foam is obtained, it is practical if the milk frothing arrangement comprises a dedicated air inlet for letting in ambient air into the main channel or mixing chamber. Preferably, the air inlet is an air inlet into the main channel, located downstream of the milk inlet, more preferably just upstream of the mixing chamber. With such location, the steam may realize different suction effects on the milk and the air, respectively.

The invention further relates to a beverage maker, comprising a milk frothing arrangement as defined and described in the foregoing, in which the controller is configured to determine a setting value that is representative of the pressure of the steam to be supplied by the steam supply arrangement in relation to input that is representative of a froth-to-milk ratio to be realized. A practical example of the beverage maker is a coffee maker configured to extract coffee input material and to output a coffee beverage.

It may be practical if the beverage maker is designed so as to comprise a main body and an accessory that is removably arranged on the main body, in which case the steam supply arrangement of the milk frothing arrangement may be incorporated in the main body, and the mixing chamber may be incorporated in the accessory. In that case, it may further be so that the controller of the milk frothing arrangement is incorporated in the main body and is part of a general controller of the beverage maker that is configured to control operation of the beverage maker.

The above-described and other aspects of the invention will be apparent from and elucidated with reference to the following detailed description of a practical embodiment of a coffee maker equipped with a milk frothing arrangement that is designed so as to allow control of the milk-to-froth ratio by varying the pressure of the steam that has a function in drawing milk from a milk supply arrangement and heating the milk.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of a coffee maker according to an embodiment of the invention, with a number of parts in an opened position or a partially or wholly removed position relative to a main body of the coffee maker,
Figure 2 diagrammatically shows a perspective view of a milk frothing unit of the coffee maker, in a disassembled state,
Figure 3 diagrammatically shows a perspective view of the milk frothing unit in an assembled state,
Figure 4 diagrammatically shows a detailed view of a channel system of the milk frothing unit,
Figure 5 diagrammatically shows a portion of the channel system of the milk frothing unit, and illustrates fluid flows through the respective channels,
Figure 6 diagrammatically shows components of a milk frothing arrangement, including the milk frothing unit and components of a steam supply arrangement,
Figure 7 shows graphs representing a number of output characteristics of the frothed milk as a function of steam pressure, and
Figure 8 shows a graph representing the level of the sound that is generated during operation of the milk frothing arrangement as a function of steam pressure.

### DETAILED DESCRIPTION OF EMBODIMENTS

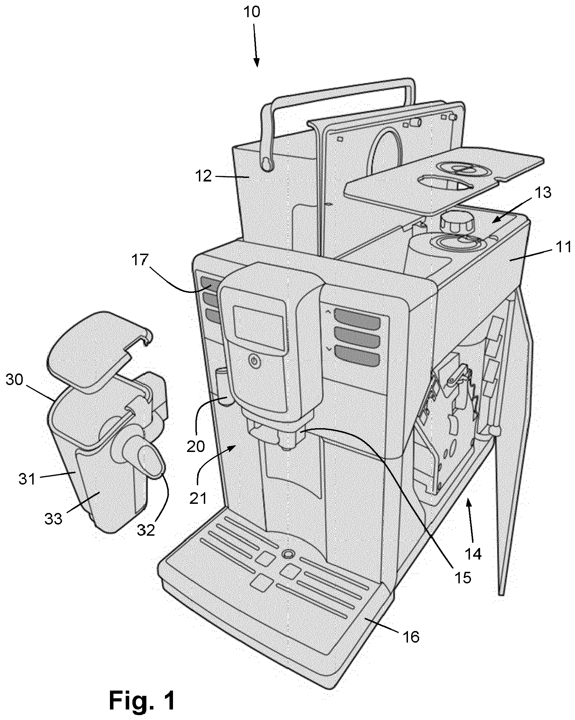

Figure 1 illustrates the design of a coffee maker 10 according to an embodiment of the invention. The coffee maker 10 is shown in a normal, operational orientation in figure 1, and where any reference having an orientation aspect is made in the present text, such reference is to be understood against the background of this normal, operational orientation. The particular coffee maker represented in figure 1 and described in the following is just one example of many types of beverage makers which are feasible in the framework of the invention.

The coffee maker 10 of the shown example is a bean-to-cup machine and comprises a main body 11 having a space for accommodating a removably arranged water reservoir 12 and a space 13 for receiving coffee beans. The coffee maker 10 further comprises an internal grinding mechanism for creating fresh coffee grind, a brewing chamber or brew group for receiving the coffee grind, and a pumping system for pumping heated water through coffee grind in the brewing chamber or brew group. These components, which are not indicated in figure 1, are located in an internal space 14 of the main body 11.

The coffee maker 10 has a coffee outlet 15 for outputting a coffee drink. The coffee outlet 15 is located over a drip tray 16. The coffee maker 10 also has a user interface 17 for receiving user selections, such as for water selection and for other drinks selections. At least some of the other drinks selections relate to drinks recipes which include frothed milk, including drinks recipes which include both coffee and frothed milk.

The coffee maker 10 further has a steam outlet 20 for outputting steam. The steam outlet 20 can also be used for delivering hot water, depending on the user selection at the user interface 17. Delivering steam is useful when it is required to heat and/or froth milk, and delivering hot water provides additional options to the user, such as making tea or instant soup. The steam outlet 20 is located in a docking region 21 configured to receive a milk frothing unit 30 as shown in figure 1 at a removed position relative to the main body 11. The milk frothing unit 30 comprises a milk container 31 and a frothed milk outlet 32. An outlet tip of the steam outlet 20 may be spring-loaded or otherwise elastically deformable or retractable so that it deforms or retracts when the milk frothing unit 30 is put in place on the main body 11, and is in this way biased (elastically, by gravity or otherwise) to provide a seal. The outlet tip of the steam outlet 20 may thus function to enable a coupling of the milk frothing unit 30 to the main body 11 through the steam outlet 20, and also to ensure a sealed character of the coupling. The milk frothing unit 30 is designed so that the steam outlet 20 does not contact the milk as may be present in the milk container 31 and there is no contamination of the steam outlet 20 with the milk during use of the milk frothing unit 30.

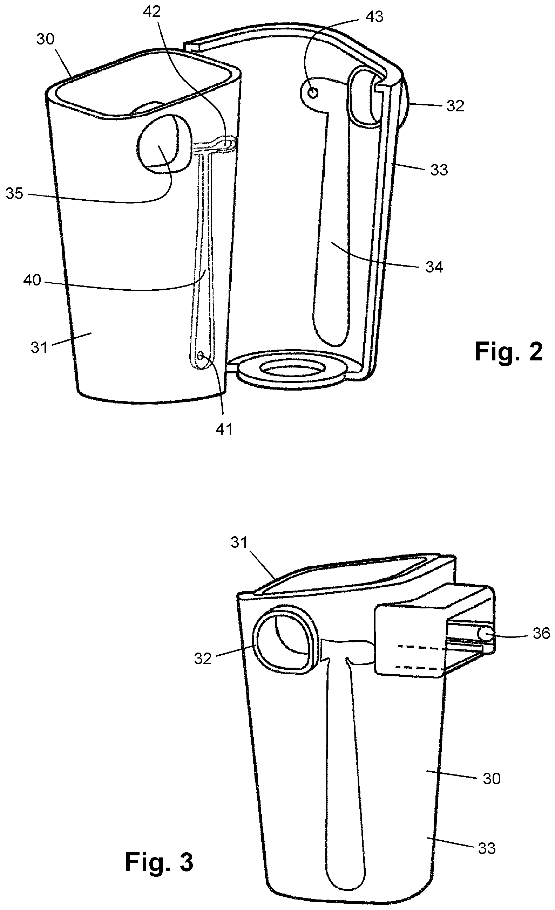

Further details of the milk frothing unit 30 are explained with reference to figures 2-5. The milk frothing unit 30 further comprises a holder 33 for receiving the milk container 31 and a seal 34 disposed between the milk container 31 and the holder 33. The seal 34 is for example a press fit inside a side wall of one of the milk container 31 and the holder 33 so that when the milk container 31 and the holder 33 are assembled, the seal 34 is sandwiched between them. In any case, the mating between the seal 34 and the one of the milk container 31 and the holder 33 forms a closed channel system which defines fluid paths for a milk inlet, a steam inlet and optionally an air inlet. By separating the milk container 31 and the holder 33, all parts can easily be cleaned.

The milk frothing unit 30 comprises a main channel 40 that is defined by the seal 34 and the milk container 31 when the milk frothing unit 30 is in an assembled state. At a bottom side, the main channel 40 comprises a milk inlet 41, through which milk can enter from the milk container 31 (thus representing a static type of milk supply arrangement into the main channel 40, as opposed to a dynamic type of milk supply arrangement, wherein milk may be pumped into and through the main channel 40 via a pumping arrangement). The main channel 40 extends up to a mixing chamber 35. The milk frothing unit 30 further comprises a steam channel 42 that is also defined by the seal 34 and the milk container 31 when the milk frothing unit 30 is in the assembled state. The steam channel 42 comprises a steam inlet 43, through which steam can enter from the steam outlet 20 of the main body 11 when the milk frothing unit 30 is properly placed in the docking region 21. Figure 3 shows the milk frothing unit 30 in the assembled state. In this figure, it can be clearly seen that the holder 33 comprises an inlet port 36 from which steam is provided to the steam inlet 43 of the steam channel 42.

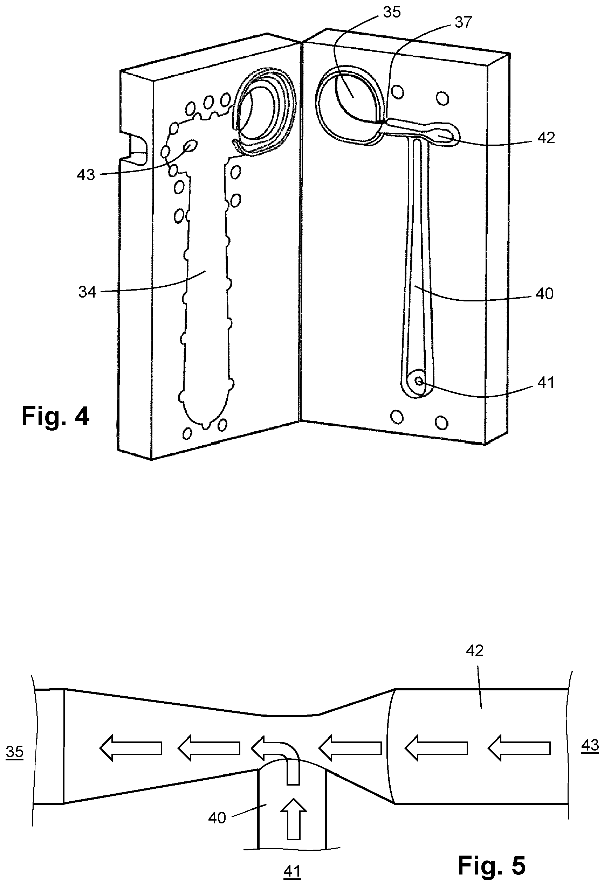

Aspects of the way in which the milk frothing unit 30 is operated are now explained, assuming that the milk frothing unit 30 is in the proper position in the docking region 21, that a quantity of milk to be frothed is present in the milk container 31, and that a drinks vessel is placed on the drip tray 16. During operation, steam is provided to the steam inlet 43 of the steam channel 42 by the steam outlet 20 of the main body 11. As steam enters the main channel 40, milk is drawn from the milk container 31 under the influence of an under pressure induced by the flow of steam, and both the milk and the steam flow towards the mixing chamber 35. As can be seen in the diagrammatic representation of figure 5, the steam channel 42 may be provided with a restriction directly upstream of the position where the steam channel 42 merges into the main channel 40. Also, the main channel 40 has a diverging section directly downstream of the position as mentioned. In this configuration, it is achieved that a Venturi effect is imparted on the milk by the steam. Directions of the flow of milk, the flow of steam, and the combined flow of milk and steam are indicated in the figure by means of arrows.

Air may be introduced through an inlet 37 at a position directly upstream of the mixing chamber 35, as illustrated in figure 4, but another position of an air inlet is also possible. As explained earlier, in the milk frothing process, introduced air is used to provide the bubbles as desired. The milk froth that is generated in the mixing chamber 35 is let out of the milk frothing unit 30 through the frothed milk outlet 32 and is received in the drinks vessel that is present on the drip tray 16 at a position more or less besides the milk frothing unit 30. The coffee maker 10 may further be operated to deliver coffee to the drinks vessel through the coffee outlet 15. This is done during operation of the milk frothing unit 30 and/or prior to operation of the milk frothing unit 30 and/or after operation of the milk frothing unit 30, depending on the beverage type that is eventually to be made.

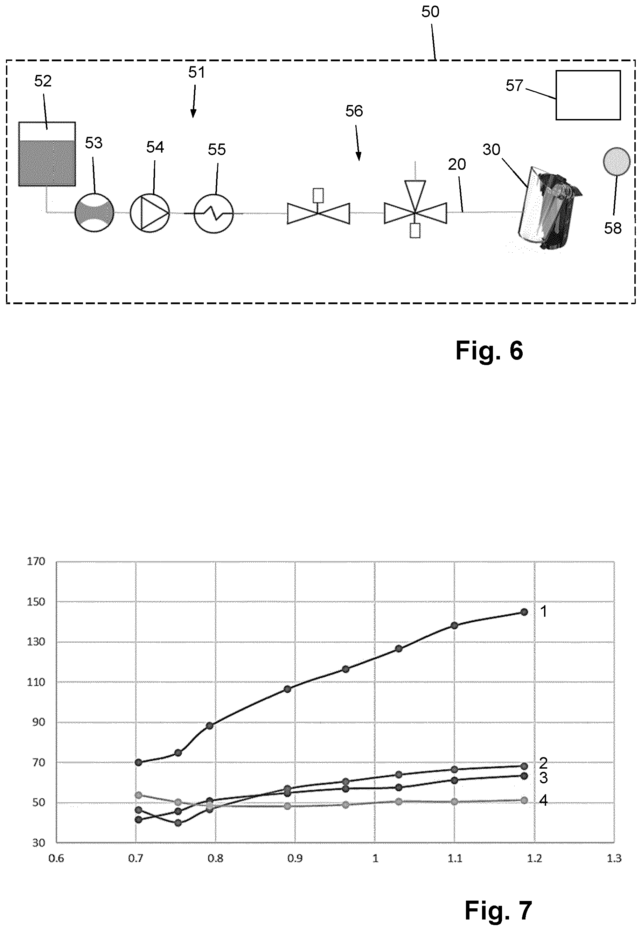

The milk frothing unit 30 is part of a milk frothing arrangement 50 that comprises the steam outlet 20 of the main body 11 and other components arranged in the main body 11. With reference to figure 6, it is noted that the milk frothing arrangement 50 comprises a steam supply arrangement 51 that comprises a number of components arranged upstream of the steam outlet 20 and in the internal space 14 of the main body 11. In the shown example these components include a water reservoir 52, a flow meter 53, a pump 54, a thermoblock 55 including an electric heater, and a number of valve arrangements 56, which does not alter the fact that other configurations of the milk frothing arrangement 50 are feasible, including configurations in which a flow-through heater is used instead of the thermoblock 55.

By controlling the amount of water pumped and the amount of energy supplied to heat the water, an output pressure of the steam can be controlled. By controlling the characteristics of the steam towards the milk frothing unit 30, the output characteristics of the frothed milk are controlled. This is illustrated in figure 7 in which a number of graphs are shown. A first graph 1 represents in-cup volume as a function of steam pressure, a second graph 2 represents froth-to-milk ratio as a function of steam pressure, a third graph 3 represents in-cup weight as a function of steam pressure, and a fourth graph 4 represents temperature against steam pressure. The in-cup volume is a summed function of in-cup weight and froth-to-milk ratio.

It is concluded from the second graph 2 that control of the froth-to-milk ratio can be realized by control of the steam pressure. The steam pressure can be controlled by controlling the amount of water transported by the pump 54 and balancing it with the power delivered by the thermoblock 55. In this respect, the following is noted:
- Delivering more water at equal thermoblock power means wetter steam, at a lower temperature, hence lower steam pressure.
- Contrariwise, delivering less water at equal thermoblock power means dryer steam, at a higher temperature, hence higher steam pressure.
- For the thermoblock power the relation is opposite: if the power is increased for equal water flow, the steam is dryer at a higher temperature and pressure.
- If the thermoblock power is decreased for equal water flow, the steam is wetter at a lower temperature and pressure.

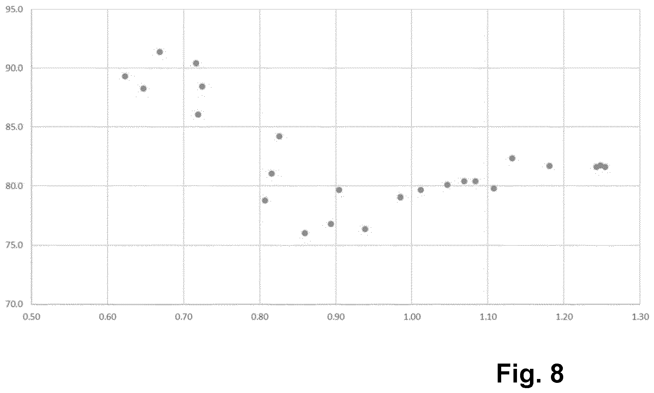

The various operation parameters of the milk frothing arrangement 50 are controlled by means of a controller 57. In a preferred embodiment, all that a user needs to do is indicate a choice of a certain beverage type by means of the user interface 17, and the controller 57 is configured to determine the value of the steam pressure that is appropriate with the indicated choice, besides other values. In this respect, it may be practical if the controller 57 is configured to choose one of various possible modes of operation of the milk frothing arrangement 50. It is possible to only apply feed forward control of the milk frothing arrangement 50, but in order to achieve that the output characteristics of the frothed milk as envisaged can be realized with high accuracy, it is preferred to apply feedback control, which can be done in case a measurement system 58 is included in the milk frothing arrangement 50 for directly or indirectly measuring the steam pressure. According to a first option, such a measurement system 58 may comprise a pressure sensor, for example, in which case a practical position of the measurement system 58 is a position directly upstream of the milk frothing unit 30. According to a second option, such a measurement system 58 may comprise a microphone or the like for measuring a level of the sound that is generated during operation of the milk frothing arrangement 50. In respect of this second option, reference is made to figure 8 in which a graph representing sound level as a function of pressure is shown. It is concluded from this graph that the sound level can be taken as a representation of the steam pressure, indeed. In practice, taking into account reaction times of the thermoblock 55 and the feedback procedure, feedback control yields the most favorable effects if initial settings are such that only small adjustments need to take place during operation.

It follows from the foregoing that basically, the controller 57 of the milk frothing arrangement 50 is configured to control the froth-to-milk ratio (and related output characteristics of the frothed milk) by determining a value of the steam pressure that is to be set. Further, it is advantageous if a measurement system 58 is applied by means of which feedback can be provided to the controller 57, which is thereby enabled to make adjustments as appear to be necessary to actually achieve the determined settings, when a deviation between measured and intended values is found that is larger than a maximum. The measurement system 58 may be configured to directly measure the steam pressure by means of a pressure sensor, but it is also possible that the measurement system 58 is configured to indirectly measure the steam pressure, such as through detecting a sound level during operation of the milk frothing arrangement 50. Applying feedback control further involves the possibility of applying artificial intelligence or a smart learning algorithm, so that the way in which the controller 57 determines the operation parameters can be adjusted if this appears to be appropriate on the basis of the measurement results. Thus, consistency of the output characteristics of the frothed milk can be enhanced.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The terms "comprise" and "include" as used in this text will be understood by a person skilled in the art as covering the term "consist of". Hence, the term "comprise" or "include" may in respect of an embodiment mean "consist of', but may in another embodiment mean "contain/have/be equipped with at least the defined species and optionally one or more other species".

Notable aspects of the invention are summarized as follows. In the field of beverage making, a milk frothing arrangement 50 is provided that comprises: a main channel 40 having a milk inlet 41 configured to receive milk from a milk supply arrangement 31; a steam supply arrangement 51; a steam channel 42 arranged to receive steam from the steam supply arrangement 51 at an upstream side and to merge into the main channel 40 at a downstream side; a mixing chamber 35 into which the main channel 40 debouches at a position downstream of the position where the steam channel 42 merges into the main channel 40; and a controller 57 configured to control operation of the milk frothing arrangement 50. The controller 57 is particularly configured to control a froth-to-milk ratio to be realized by controlling the pressure of the steam to be supplied by the steam supply arrangement 51, wherein the froth-to-milk ratio may be derived from input provided by a user about a beverage type that is to be made.

## Claims

1. Milk frothing arrangement (50), comprising:
- a main channel (40) having a milk inlet (41) configured to receive milk from a milk supply arrangement (31);
- a steam supply arrangement (51);
- a steam channel (42) arranged to receive steam from the steam supply arrangement (51) at an upstream side and to merge into the main channel (40) at a downstream side;
- a mixing chamber (35) into which the main channel (40) debouches at a position downstream of the position where the steam channel (42) merges into the main channel (40); and
- a controller (57) configured to control operation of the milk frothing arrangement (50), to receive input that is representative of a froth-to-milk ratio to be realized, and to determine a setting value that is representative of the pressure of the steam to be supplied by the steam supply arrangement (51) in relation to the input.

2. Milk frothing arrangement (50) according to claim 1, wherein the controller (57) is configured to set one of at least two modes of operation which are different at least as far as the froth-to-milk ratio to be realized is concerned, wherein the at least two different modes of operation involve different setting values which are representative of the pressure of the steam to be supplied by the steam supply arrangement (51).

3. Milk frothing arrangement (50) according to claim 2, comprising a user interface (17) configured to enable a user to instruct the controller (57) which one of the at least two modes of operation is to be set.

4. Milk frothing arrangement (50) according to any of claims 1-3, wherein the steam supply arrangement (51) comprises an electric heater configured to heat water in a heating area (55) of the steam supply arrangement (51).

5. Milk frothing arrangement (50) according to claim 4, wherein a setting value of electric power to be supplied to the electric heater is determined in relation to the setting value that is representative of the pressure of the steam to be supplied by the steam supply arrangement (51).

6. Milk frothing arrangement (50) according to claim 4 or 5, wherein the steam supply arrangement (51) comprises a pumping arrangement (54) configured to transport an amount of water through the heating area (55), and wherein a setting value of the amount of water is determined in relation to the setting value that is representative of the pressure of the steam to be supplied by the steam supply arrangement (51).

7. Milk frothing arrangement (50) according to any of claims 1-6, comprising a measurement system (58) configured to measure a value of the pressure of the steam supplied by the steam supply arrangement (51) and/or a value of a parameter that varies with the pressure of the steam supplied by the steam supply arrangement (51).

8. Milk frothing arrangement (50) according to claim 7, wherein the controller (57) is configured to receive the measured value from the measurement system (58) as a feedback value, to make a comparison between a) the setting value determined in relation to the input that is representative of the froth-to-milk ratio to be realized and b) the feedback value, and to adjust operation of the milk frothing arrangement (50), for instance the steam supply arrangement (51), in case a difference between the setting value and the feedback value is found and the difference is larger than a maximum, to thereby reduce the difference.

9. Milk frothing arrangement (50) according to claim 7 or 8, wherein the measurement system (58) is configured to measure a level of sound generated during operation of the milk frothing arrangement (50), and wherein the measured value that is received by the controller (57) from the measurement system (58) as a feedback value is the measured level of the sound.

10. Milk frothing arrangement (50) according to any of claims 7-9, wherein the controller (57) is configured to adjust an algorithm used to control operation of the milk frothing arrangement (50) on the basis of an actual adjustment of operation of the milk frothing arrangement (50), and to apply the adjusted algorithm thus obtained in a following milk frothing action.

11. Milk frothing arrangement (50) according to any of claims 1-10, comprising an air inlet (37) to the main channel (40) at a position downstream of the milk inlet (41) of the main channel (40).

12. Beverage maker (10), comprising a milk frothing arrangement (50) according to any of claims 1-11.

13. Beverage maker (10) according to claim 12, being a coffee maker configured to extract coffee input material and to output a coffee beverage.

14. Beverage maker (10) according to claim 12 or 13, comprising a main body (11) and an accessory (30) that is removably arranged on the main body (11), wherein the steam supply arrangement (51) of the milk frothing arrangement (50) is incorporated in the main body (11), and wherein the mixing chamber (35) is incorporated in the accessory (30).

15. Beverage maker (10) according to claim 14, wherein the controller (57) of the milk frothing arrangement (30) is incorporated in the main body (11) and is part of a general controller of the beverage maker (10) that is configured to control operation of the beverage maker (10).
